# NEUE EUROPÄISCHE PATENTSCHRIFT

(11) **EP 2 769 055 B2**
(45) Veröffentlichungstag und Bekanntmachung des Hinweises auf die Entscheidung über den Einspruch: **28.10.2020**
(45) Hinweis auf die Patenterteilung: 28.09.2016
(21) Anmeldenummer: 12780138.9
(22) Anmeldetag: 11.10.2012
(51) Int. Cl.: E21C 35/183, B02C 4/30, B23K 9/20, B23K 35/02

(54) **VERSCHLEISSSCHUTZELEMENT**
WEAR PROTECTION ELEMENT
ÉLÉMENT DE PROTECTION CONTRE L'USURE

(30) Priorität: 18.10.2011 DE 102011054573
(43) Veröffentlichungstag der Anmeldung: 27.08.2014
(73) Patentinhaber: Betek GmbH & Co. KG, 78733 Aichhalden (DE)
(72) Erfinder: DETEMPLE, Pascal, 78713 Schramberg (DE); KRÄMER, Ulrich, 77709 Wolfach (DE)
(74) Vertreter: Herrmann, Jochen
(86) Internationale Anmeldenummer: PCT/EP2012/070190
(87) Internationale Veröffentlichungsnummer: WO 2013/057038

(56) Entgegenhaltungen:
- DE-U1- 8 612 330
- DE-U1- 29 600 480
- US-A1- 2008 036 276
- US-A1- 2008 099 251
- US-A1- 2008 164 072
- US-A1- 2008 309 146
- US-A1- 2008 315 667
- Offenkundige Vorbenutzung durch Noppenbolzen der Einsprechenden des Typs HM 9
- Offenkundige Vorbenutzung durch Noppenbolzen der Einsprechenden des Typs HM 8-9 und des Typs HM 9
- Offenkundige Vorbenutzung durch die Einsprechende und ihre Lieferantin zu Verschleißschutzelementen des Typs TC-spike 45° D16

## Beschreibung

Die Erfindung betrifft ein Verschleißschutzelement, nämlich einen Noppenbolzen, mit einem Trägerteil, der ein Hartstoff-Element in oder an einer Aufnahme trägt, wobei das Hartstoff-Element mit einer bodenseitigen Stützfläche eines Befestigungsabschnittes auf einer Gegenfläche des Tragteils mittelbar oder unmittelbar abgestützt ist.

Aus der US2008/309146 ist ein Verschleißelement mit den Merkmalen der Präambel bekannt.

Aus der DE 86 12 330 U1 ist ein Noppenbolzen bekannt, der einen Tragteil aus einem gut schweißbaren Stahlwerkstoff aufweist. Das Tragteil ist mit einer Aufnahme ausgestattet, die beispielsweise als Bohrung oder als Kegelsitz ausgebildet sein kann. In bzw. an der Aufnahme ist ein Hartstoff-Element, vorliegend ein Hartmetallstück, angeordnet. Ist eine Bohrung in das Tragteil eingearbeitet, so wird ein Hartmetallstift als Hartstoff-Werkstoff verwendet, der in diese Bohrung eingelötet ist. Der Noppenbolzen dient zum Verschleißschutz von stark Verschleiß beanspruchten Oberflächen. Hierzu werden eine Vielzahl von Noppenbolzen in einem Raster zueinander beabstandet auf die zu schützende Oberfläche aufgeschweißt. Beispielsweise kann die zu schützende Oberfläche Teil eines Erdbearbeitungswerkzeuges sein. Während des Arbeitseingriffes wird dann Erdmaterial über die Oberfläche und die Noppenbolzen geleitet. Aufgrund der Rasterstruktur lagert sich Erdreich in den Räumen zwischen den Noppenbolzen ab, und bildet hier eine Art natürlichen Verschleißschutz. Das Tragteil des Noppenbolzens nutzt sich während des Bearbeitungseinsatzes ab; das Hartstoff-Element hingegen unterliegt aufgrund seiner Werkstoffkennwerte einem geringeren Verschleiß.

Es hat sich gezeigt, dass das gegenüber dem Hartstoff-Element relativ weichere Material des Tragteiles bei stark abrasiven Werkstoffen schnell ausgewaschen wird. Dann findet das Hartstoff-Element nicht mehr ausreichend Halt und bricht aus.

Die DE 86 12 330 U1 schlägt auch vor, anstelle der Bohrung einen Außenkegelsitz für das Hartstoff-Element zu verwenden. Dementsprechend wird das HartstoffElement dann als Ringkörper ausgebildet, und auf dem Kegelsitz umfangsseitig verlötet. Diese Variante bietet bei stark abrasiven Materialien zwar einen verbesserten Schutz gegen Auswaschung, jedoch ist das Hartstoff-Element bei stark stoßartigen Belastungen anfällig gegen Bruch. Hier erweist sich die ringförmige Gestaltung des Hartstoff-Elementes als besonders nachteilig.

Es ist Aufgabe der Erfindung, ein Verschleißschutzelement der eingangs erwähnten Art zu schaffen, dass sich sowohl bei stark stoßartigen als auch stark abrasiven Belastungen als besonders standfest auszeichnet.

Diese Aufgabe wir dadurch gelöst, dass an den Befestigungsabschnitt, mit dem das Hartstoff-Element an dem Tragteil befestigt ist, mittelbar oder unmittelbar ein Übergangsabschnitt angeschlossen ist, der die Außenkontur des Hartstoff-Elementes in Richtung auf dessen, der Stützfläche abgewandtes Ende zumindest bereichsweise verjüngt.

Mit dieser Gestaltung wird zunächst erreicht, dass der Befestigungsabschnitt des Hartstoff-Elementes den darunter liegenden Bereich des Tragteiles überdeckt, und ihn so vor Auswaschung schützt. Die verjüngte Geometrie des Hartstoff-Elementes ist auch stoßoptimiert ausgelegt, denn die Energie aufprallender Elemente, beispielsweise Steine, wird besser abgeleitet. Insbesondere werden die Aufprallkräfte vektoriell in Längs- und Querkräfte aufgeteilt, was zu einer optimierten Gesamtbeanspruchung des Noppenbolzens führt. Besonders vorteilhaft ist auch, der durch die Geometrie des Hartstoff-Elementes bedingte geringere Materialverbrauch an Hartstoff-Werkstoff gegenüber beispielsweise zylindrischen Bauteilen.

Erfindungsgemäß ist es vorgesehen, dass das Hartstoff-Element der Stützfläche abgewandt mit einem konvexen Endabschnitt abschließt. Diese Gestaltung hat den Vorteil, dass vertikal zur bodenseitigen Stützfläche wirkende Stoßkräfte sicher abgefangen werden können. Zudem ist diese Gestaltung auch spannungsoptimiert ausgelegt, denn es werden im besonders anfälligen Kopfbereich des Hartstoff-Elementes scharfkantige Übergänge vermieden. Weiterhin ergibt sich eine verbesserte Materialableitung und hierdurch ein verbessertes Verschleißverhalten.

Besonders bevorzugt ist der Verjüngungsabschnitt mit wenigstens einem stumpfkegelförmigen Bereich ausgebildet. Mit einer derartigen Gestaltung lässt sich die Montage des Hartstoff-Elementes am Tragteil automatisiert vereinfachen, denn es wird hier eine definierte Angriffsstelle für ein Montagewerkzeug geboten.

Denkbar ist es auch, den Verjüngungsabschnitt zumindest bereichsweise konkav auszubilden. Hierdurch wird eine Verringerung des Hartstoff-Volumens und damit des Materialeinsatzes ermöglicht. Denkbar ist es jedoch auch, den Verjüngungsabschnitt zumindest bereichsweise konvex auszubilden. Hierdurch ergibt sich eine massivere Querschnittsgestaltung des Hartstoff-Elementes, die zu einer robusteren Bauweise führt. Letztendlich ist die Wahl der Gestaltung des Verjüngungsabschnittes auch von dem jeweiligen Einsatzzweck abhängig. Während konvexe Bereiche eher in stark abrasiven Medien vorteilhaft sind, lassen sich konkave Bereiche beispielsweise bei solchen zu bearbeitenden Materialien einsetzen, die eher die Zwischenräume im Raster zwischen den Noppenbolzen schnell zusetzen. Weiterhin sind konkave Gestaltungen aufgrund der geringeren Masse des Hartstoffes für rotierende Werkzeuge gut geeignet. Die stumpfkegelförmige Geometrie bietet einen guten Kompromiss für viele Bearbeitungsaufgaben.

Besonders bevorzugt ist das Verschleißschutzelement dergestalt, dass der Befestigungsabschnitt einen umlaufenden Bund bildet, der an seinem Außenumfang eine konvexe Wölbung aufweist. Die konvexe Wölbung ist wieder verschleißoptimiert ausgelegt, und bietet angreifendem Material einen nur geringen Widerstand. Darüber hinaus ist durch diese Maßnahme die Bruchgefahr des Hartstoff-Werkstoffes bei stoßartiger Belastung reduziert. Insbesondere sind Kerbspannungen vermieden.

Wenn in die Stützfläche des Hartstoff-Elementes eine Ausnehmung eingearbeitet ist, dann lässt sich die Masse des Hartstoff-Werkstoffes weiter reduzieren, ohne dass hierdurch nennenswerte Einschränkungen der Verschleißkennwerte gegeben sind. Zudem wird durch diese Maßnahme eine Vergrößerung der Befestigungsfläche zwischen dem Tragteil und dem Hartstoff-Element zugunsten einer größeren Scherfestigkeit erreicht.

Für eine zuverlässige Montage des Hartstoff-Elementes kann es erfindungsgemäß vorgesehen sein, dass das Tragteil eine eingetiefte Aufnahme für das Hartstoff-Element aufweist, die zumindest bereichsweise von einem Mantelteil umgeben ist. An dem Mantelteil lässt sich das Hartstoff-Element während der Montage lagerichtig und zuverlässig ausrichten.

Gemäß einer Erfindungsvariante kann ein Verschleißschutzelement dergestalt sein, dass zwischen der Außenkontur des Hartstoff-Elementes und der Innenwandung des Mantelteils zumindest bereichsweise ein Hohlraum gebildet ist. In diesen Hohlraum kann sich Bearbeitungs- bzw. Abraummaterial hineinverdichten, was zu einem natürlichen Verschleißschutz führt, und bei bestimmten Bearbeitungs- bzw. Abraummaterialien eine Verringerung des abrasiven Angriffes an dem Noppenbolzen ermöglicht.

Wenn das Verschleißschutzelement dergestalt ist, dass die Gegenfläche des Tragteils von einem Basisteil gebildet ist, und dass von dem Basisteil das Mantelteil aufsteigt, dann wird eine einfache Bauform erreicht, die sich leicht fertigen lässt.

Eine besonders bevorzugte Erfindungsvariante ist derart, dass das Tragteil mittelbar oder unmittelbar im Anschluss an die Gegenfläche einen vorzugsweise stumpfkegelförmigen ersten Verbindungsabschnitt und daran mittelbar oder unmittelbar anschließend einen vorzugsweise stumpfkegelförmigen zweiten Verbindungsabschnitt aufweist, und dass diese beiden Verbindungsabschnitte den Querschnitt des Tragteils in Richtung auf das dem Hartstoff-Element abgewandten Ende verjüngen. Die Gestalt mit den beiden querschnittsverjüngenden Verbindungsabschnitten zeichnet sich durch eine gute Schweißbarkeit aus, denn hierdurch wird der Stromfluss während des Schweißvorganges optimiert.

Besonders bevorzugt weist der zweite Verbindungsabschnitt unmittelbar ein Kontaktelement auf, das zur Kontaktierung während des Schweißvorganges dient. Dieses Kontaktelement kann beispielsweise als Aluminiumspitze ausgebildet sein.

Die Aufgabe der Erfindung wird auch gelöst mit einer Kombination bestehend aus einem schweißbaren Werkstück und einem Verschleißschutzelement nach einem der Ansprüche 1 bis 9.

Bei einer solchen Kombination kann es erfindungsgemäß insbesondere vorgesehen sein, dass im Übergangsbereich zwischen dem Basisteil und dem Mantelteil außenseitig ein wulstförmiger Schweißbereich gebildet ist. Dieser Schweißbereich kann insbesondere umlaufend ausgebildet sein. Der wulstförmige Schweißbereich weist eine größere Verschleißhärte als das Tragteil auf, und schützt somit den Übergangsbereich des Tragteils zum Werkstück und dient mithin als Auswaschungs-Schutz.

Die Erfindung wird im Folgenden anhand eines in den Zeichnungen dargestellten Ausführungsbeispieles näher erläutert. Es zeigen:
- Figur 1: in Seitenansicht ein Werkstück, auf das ein Noppenbolzen umgeben von einem Keramikring aufgesetzt ist;
- Figur 2: den Noppenbolzen gemäß Figur 1 aufgeschweißt auf das Werkstück in Seitenansicht;
- Figuren 3 und 4: verschiedene Verschleißzustände des Noppenbolzens gemäß Figur 2 in Seitenansicht; und
- Figuren 5 bis 8: die Darstellungen gemäß Figuren 1 bis 4 in Seitenansicht und im Vollschnitt.

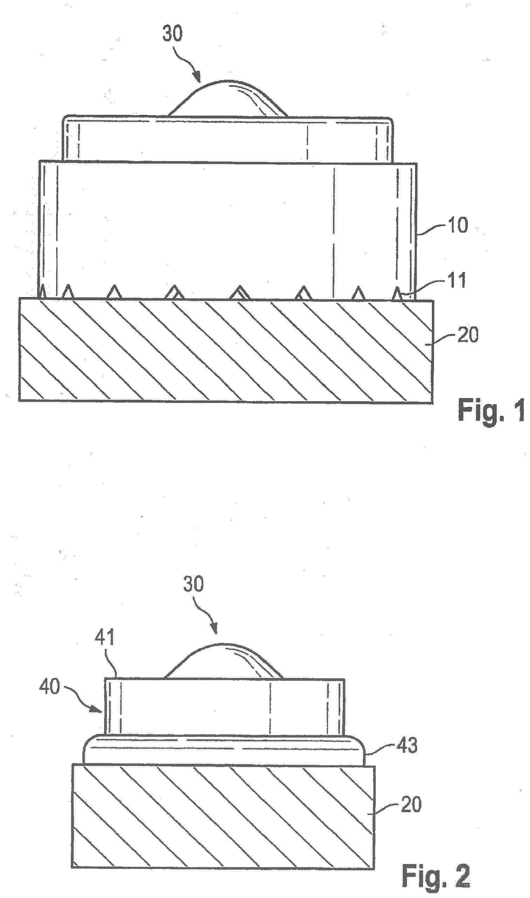

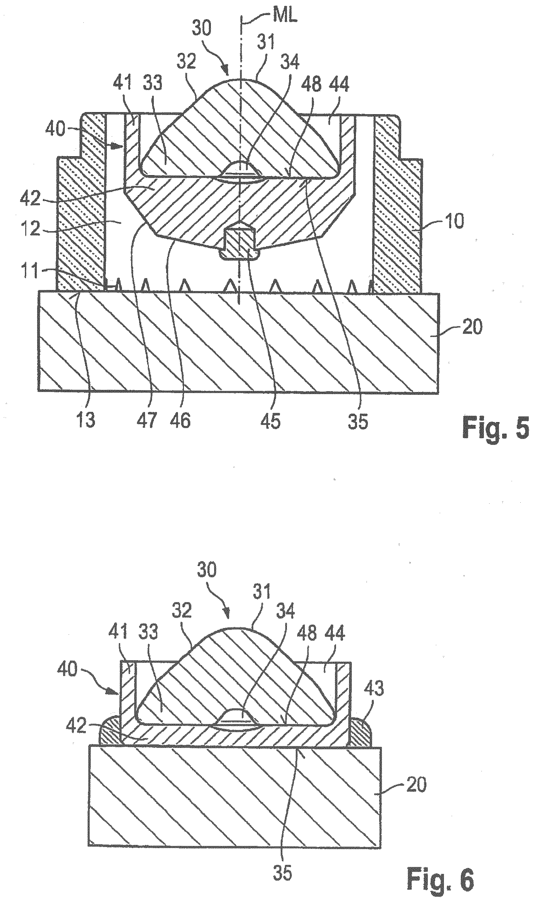

Wie die Figuren 1 und 5 zeigen, weist das Verschleißschutzelement, das vorliegend als Noppenbolzen ausgebildet ist, einen Tragteil 40 und ein Hartstoff-Element 30 auf. Das Tragteil 40 besteht aus einem schweißbaren Material mit guten elektrischen Leitfähigkeiten. Es weist ein Basisteil 42 auf, von dem ein ringförmig umlaufender Mantel 41 aufsteigt. Der Mantel 41 umschließt einen zylindrischen Hohlraum 44 und ist an seiner Außenkontur ebenfalls zylinderförmig ausgebildet. Das Basisteil 42 bildet, dem Hohlraum 44 zugewandt, eine bodenseitige Gegenfläche 48. An das Basisteil 42 schließt sich, dem Mantel 41 abgekehrt, ein erster Verjüngungsabschnitt 47 mit stumpfkegelförmiger Gestalt an. An diesen ersten Verjüngungsabschnitt 47 ist unmittelbar ein zweiter Verjüngungsabschnitt 46 ebenfalls mit stumpfkegelförmiger Geometrie angeschlossen. Dabei ist der Kegelwinkel des ersten Verjüngungsabschnittes 47 größer als der des zweiten Verjüngungsabschnittes 46. In den zweiten Verjüngungsabschnitt 46 ist eine Bohrung eingebracht, wobei die Bohrungsachse dieser Bohrung mit der Mittellängsachse ML des Noppenbolzens fluchtet. In die Bohrung ist ein Kontaktelement 45, bestehend aus einem elektrisch gut leitfähigen Material, beispielsweise Aluminium, eingepresst.

Das Tragteil 40 nimmt in dem Hohlraum 44 ein Hartstoff-Element 30, bestehend beispielsweise aus Keramik oder Hartmetall, auf. Das Hartstoff-Element 30 weist einen Befestigungsabschnitt 33 mit einer bodenseitigen Stützfläche 35 auf. Dabei ist die Stützfläche 35 orthogonal zur Mittellängsachse ML ausgerichtet. In die Stützfläche 35 ist eine Ausnehmung 34 eingetieft. An den Befestigungsabschnitt 33 schließt sich ein Übergangsabschnitt 32 und an diesen ein Endabschnitt 31 an. Der Übergangsabschnitt 32 hat die Aufgabe, den Querschnitt des Hartstoff-Elementes 30 ausgehend von dem Befestigungsabschnitt 33 zu dem Endabschnitt 31 hin zu verjüngen. Im vorliegenden Ausführungsbeispiel ist der Übergangsabschnitt 32 mit zwei aneinandergesetzten stumpfkegelförmigen Geometriebereichen ausgestaltet. Denkbar ist es auch, nur einen stumpfkegelförmigen Abschnitt zu verwenden. Es ist weiterhin im Rahmen der Erfindung denkbar, einen oder mehrere konkave/n oder konvexe/n Abschnitt/e zu verwenden. Denkbar ist auch, dass der Verjüngungsabschnitt zwischen verjüngenden Bereichen zylindrische Bereiche aufweist. Der Endabschnitt 31 ist kalottenförmig ausgeführt und schließt unmittelbar an den stumpfkegelförmigen Bereich des Übergangsabschnittes 32 an.

Zur Montage des Hartstoff-Elementes 30 in dem Hohlraum 44 des Tragteiles 40 wird beispielsweise ein Lot verwendet. Dieses ist im Übergangsbereich zwischen der Stützfläche 35 und der Gegenfläche 48 positioniert. Über die Lotverbindung wird das Hartstoff-Element 30 stoffschlüssig an dem Tragteil 40 fixiert. Im montierten Zustand bleibt der Bereich zwischen der Außenkontur des Übergangsabschnittes 32 und der Innenkontur des Mantels 41 unausgefüllt, sodass der Hohlraum 44 hier Freibereiche bildet. Wie Figur 5 erkennen lässt, ist der aus Tragteil 40 und Hartstoff-Element 30 zusammengesetzte Noppenbolzen rotationssymmetrisch zur Mittellängsachse ML aufgebaut.

Für die Durchführung des Schweißvorganges wird ein Keramikring 10 verwendet, der eine zylindrische Innenaufnahme 12 aufweist, die den Noppenbolzen aufnimmt. Der Keramikring 10 weist eine untere Stützfläche 13 auf, die auf die Oberfläche eines Werkstückes 20 aufgesetzt werden kann. Das Werkstück 20 ist Bauteil beispielsweise einer Erdbearbeitungsmaschine, und die Oberfläche dieses Bauteiles gilt es mit einer Verschleißschutz-Anordnung bestehend aus einer Vielzahl von Noppenbolzen zu schützen. Dabei sind die Noppenbolzen auf der Oberfläche des Werkstückes, vorzugsweise im Teilungsraster, angeordnet. Der Keramikring 10 ist im Bereich der Stützfläche 13 mit Ausnehmungen versehen, die als Gasauslässe 11 dienen. Zur Befestigung des Noppenbolzens auf dem Werkstück 20 wird an dem Keramikring 10 ein Schweißwerkzeug (nicht dargestellt) angesetzt, das das Tragteil 40 elektrisch kontaktiert. In das Tragteil 40 wird dann ein Schweißstrom eingeleitet, der zwischen dem Kontaktelement 45 und der Oberfläche des Werkstückes 20 einen Lichtbogen erzeugt. Hierdurch wird zum einen das Werkstück 20 im Bereich der Oberfläche angeschmolzen. Zum anderen werden auch die beiden Verjüngungsabschnitte 46, 47 sowie das Kontaktelement 45 aufgeschmolzen. Anschließend sinkt der Noppenbolzen in die so gebildete Metallschmelze ein und nach Erkalten ergibt sich eine feste Schweißverbindung im Übergangsbereich zwischen dem Basisteil 42 und dem Werkstück 20, wie dies die Figuren 2 und 6 zeigen. Dabei ist der Schweißvorgang so ausgeführt, dass im Übergangsbereich zwischen dem Basisteil 42, dem Mantelteil 41 und der Oberfläche des Werkstückes 20 ein umlaufender, wulstförmiger Schweißbereich bildet. Das hier angesammelte Schweißmaterial dient zum Verschleißschutz des Übergangsbereichs.

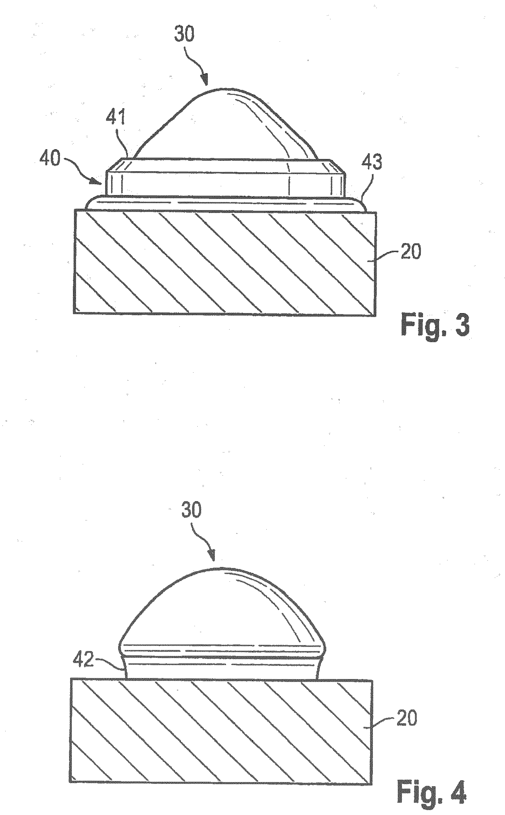

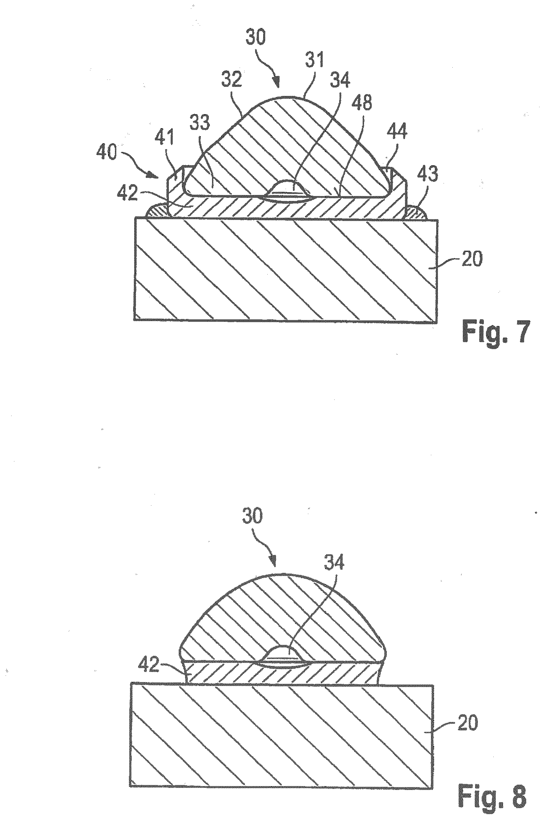

Figuren 3 und 7 zeigen den Zustand des Noppenbolzens nach einer gewissen Einsatzdauer. Wie diese Zeichnungen erkennen lassen, schleift sich während des Bearbeitungseinsatzes das Mantelteil 41 zunehmend ab, wobei auch eine Verdichtung des angreifenden Materials im Hohlraum 44 stattfindet. Dieses Material bildet eine Art natürlichen Verschleißschutz, der zum einen das Mantelteil 41 innenseitig und zum anderen das Hartstoff-Element 30 schützt. Die Figuren 3 und 7 lassen auch erkennen, dass sich aufgrund des Verschleißangriffes der Schweißbereich 43 zunehmend abnutzt.

Figuren 4 und 8 zeigen einen weiter verschlissenen Zustand des Noppenbolzens. Der Mantel 41 und der Schweißabschnitt 43 sind nun vollständig verschlissen. Wie diese Zeichnungen deutlich erkennen lässt, wird nun das Basisteil 42 von dem darüber liegenden Hartstoff-Element 30 überdeckt, sodass dieser Bereich, der für die zuverlässige Befestigung des Hartstoff-Elementes 30 an dem Werkstück 20 dient, zuverlässig geschützt ist. Aufgrund der geringen Beabstandung des Befestigungsabschnittes 33 gegenüber der Oberfläche des Werkstückes 20 wird das Basisteil 42 lediglich in Randbereichen leicht ausgewaschen, wie dies die Figuren 4 und 8 erkennen lassen. Die Beabstandung zwischen der Oberseite des Werkstückes 20 und der Stützfläche 35 des Hartstoff-Elementes 30 sollte daher kleiner als 5 mm, vorzugsweise insbesondere kleiner als 3 mm, gewählt werden. Hierdurch wird dann erreicht, dass sich das Hartstoff-Element 30 über seine gesamte Lebensdauer kontinuierlich abnutzen lässt, sodass sich auch im Zusammenhang mit der geometrischen Ausgestaltung des Hartstoff-Elementes 30 eine optimierte Verschleißeigenschaft ergibt.

## Patentansprüche

1. Verschleißschutzelement, nämlich Noppenbolzen, mit einem Trägerteil (40), der ein Hartstoff-Element (30) in oder an einer Aufnahme trägt, wobei das Hartstoff-Element (30) mit einer bodenseitigen Stützfläche (35) eines Befestigungsabschnittes (33) auf einer Gegenfläche (48) des Tragteils (40) mittelbar oder unmittelbar abgestützt ist,
**dadurch gekennzeichnet,**
**dass** an den Befestigungsabschnitt (33) mittelbar oder unmittelbar ein Übergangsabschnitt (32) angeschlossen ist, der die Außenkontur des Hartstoff-Elementes (30) in Richtung auf dessen, der Stützfläche (35) abgewandtes Ende zumindest bereichsweise verjüngt,
**dass** das Tragteil (40) eine eingetiefte Aufnahme für das Hartstoff-Element (30) aufweist, die zumindest bereichsweise von einem Mantelteil (41) umgeben ist, dass die Gegenfläche (48) des Tragteils (40) von einem Basisteil (42) gebildet ist, von dem das Mantelteil (41) aufsteigt,
und **dass** das Hartstoff-Element (30) der Stützfläche (35) abgewandt mit einem konvexen Endabschnitt (31) abschließt.

2. Verschleißschutzelement nach Anspruch 1,
**dadurch gekennzeichnet,**
**dass** der Verjüngungsabschnitt (32) wenigstens einen stumpfkegelförmigen Bereich aufweist.

3. Verschleißschutzelement nach einem der Ansprüche 1 oder 2,
**dadurch gekennzeichnet,**
**dass** der Verjüngungsabschnitt (32) wenigstens einen konkaven und/oder eine konvexen Bereich aufweist.

4. Verschleißschutzelement nach einem der Ansprüche 1 bis 3,
**dadurch gekennzeichnet,**
**dass** der Befestigungsabschnitt (33) einen umlaufenden Bund bildet, der an seinem Außenumfang eine konvexe Wölbung aufweist.

5. Verschleißschutzelement nach einem der Ansprüche 1 bis 4,
**dadurch gekennzeichnet,**
**dass** in die Stützfläche (35) eine Ausnehmung (34) eingearbeitet ist.

6. Verschleißschutzelement nach einem der Ansprüche 1 bis 5,
**dadurch gekennzeichnet,**
**dass** zwischen der Außenkontur des Hartstoff-Elementes (30) und der Innenwandung des Mantelteils (41) zumindest bereichsweise ein Hohlraum (44) gebildet ist.

7. Verschleißschutzelement nach einem der Ansprüche 1 bis 6,
**dadurch gekennzeichnet,**
**dass** das Basisteil (42) eine zylindrische Außenkontur aufweist.

8. Verschleißschutzelement nach einem der Ansprüche 1 bis 7,
**dadurch gekennzeichnet,**
**dass** das Tragteil (40) mittelbar oder unmittelbar im Anschluss an die Gegenfläche (48) einen vorzugsweise stumpfkegelförmigen ersten Verbindungsabschnitt (47) und daran mittelbar oder unmittelbar anschließend einen zweiten Verbindungsabschnitt (46) aufweist, und
**dass** diese beiden Verbindungsabschnitte (46, 47) den Querschnitt des Tragteils (40) in Richtung auf das dem Hartstoff-Element (30) abgewandten Ende verjüngen.

9. Verschleißschutzelement nach Anspruch 8,
**dadurch gekennzeichnet,**
**dass** der zweite Verbindungsabschnitt (46) ein Kontaktelement (45) trägt.

10. Kombination bestehend aus einem schweißbaren Werkstück (20) und einem Verschleißschutzelement nämlich einem Noppenbolzen nach einem der Ansprüche 1 bis 9.

11. Kombination nach Anspruch 10, **dadurch gekennzeichnet, dass** im Übergangsbereich zwischen dem Basisteil (42) und dem Mantelteil (41) außenseitig ein wulstförmiger Schweißbereich (43) gebildet ist.

12. Kombination nach Anspruch 11, **dadurch gekennzeichnet, dass** der wulstförmige Schweißbereich ringförmig umlaufend ausgebildet ist.

## Claims

1. Wear protection element, namely a studded bolt, with a carrier part (40) which carries a hard material element (30) in or on a receptacle, the hard material element (30) being supported indirectly or directly on a counter-surface (48) of the carrier part (40) by a bottom-side supporting surface (35) of a fastening section (33),
**characterised,**
**in that** a transition section (32) is connected directly or indirectly to the fastening section (33), which transition section (32) tapers the outer contour of the hard material element (30) at least in some areas in the direction of its end remote from the supporting surface (35),
**in that** the supporting part (40) has a recessed receptacle for the hard material element (30), which is surrounded at least in regions by a jacket part (41),
**in that** the counter surface (48) of the supporting part (40) is formed by a base part (42) from which the jacket part (41) rises,
and **in that** the hard material element (30) ends with a convex end section (31) facing away from the supporting surface (35).

2. Wear protection element according to claim 1,
**characterised**
**in that** the tapering section (32) has at least one frustoconical region.

3. Wear protection element according to one of claims 1 or 2,
**characterised**
**in that** the tapering section (32) has at least one concave and/or one convex region.

4. Wear protection element according to one of claims 1 to 3,
**characterised**
**in that** the fastening section (33) forms a circumferential collar which has a convex curvature on its outer circumference.

5. Wear protection element according to one of claims 1 to 4,
**characterised**
**in that** a recess (34) is worked into the supporting surface (35).

6. Wear protection element according to one of claims 1 to 5,
**characterised**
**in that** a cavity (44) is formed at least in regions between the outer contour of the hard material element (30) and the inner wall of the jacket part (41).

7. Wear protection element according to one of claims 1 to 6,
characterised
that the base part (42) has a cylindrical outer contour.

8. Wear protection element according to one of claims 1 to 7,
**characterised,**
**in that** the supporting part (40) has a preferably frustoconical first connecting section (47) directly or indirectly adjoining the mating surface (48) and a second connecting section (46) directly or indirectly adjoining the first connecting section (47), and
**in that** these two connecting sections (46, 47) taper the cross-section of the supporting part (40) towards the end remote from the hard material element (30).

9. Wear protection element according to claim 8,
**characterised**
**in that** the second connecting section (46) carries a contact element (45).

10. Combination consisting of a weldable workpiece (20) and a wear protection element, namely a studded bolt according to one of claims 1 to 9.

11. Combination according to claim 10,
**characterised**
**in that** a bead-shaped welding region (43) is formed on the outside in the transition region between the base part (42) and the jacket part (41).

12. Combination according to claim 11,
**characterised**
**in that** the bead-shaped welding region is formed in an annular circumferential manner.

## Revendications

1. Élément de protection contre l'usure, à savoir goujon, avec une partie de support (40), qui supporte un élément en matériau dur (30) dans ou au niveau d'un logement, l'élément en matériau dur (30) étant appuyé indirectement ou directement avec une surface d'appui (35), côté fond, d'une portion de fixation (33), sur une contre-surface (48) de la partie de support,
**caractérisé en ce que**
au niveau de la portion de fixation (33), est raccordée, indirectement ou directement, une portion de transition (32), au niveau de laquelle le contour extérieur de l'élément en matériau dur (30) se rétrécit au moins partiellement en direction de son extrémité opposée à la surface d'appui (35),
la partie de support (40) comprend un logement réalisé pour l'élément en matériau dur (30), qui est entouré au moins partiellement par une partie d'enveloppe (41),
la contre-surface (48) de la partie de support (40) est constituée d'une partie de base (42), à partir de laquelle la partie d'enveloppe (41) monte
et l'élément en matériau dure (30) est terminé, à l'opposé de la surface d'appui (35), par une portion d'extrémité convexe (31).

2. Élément de protection contre l'usure selon la revendication 1,
**caractérisé en ce que**
la portion de rétrécissement (32) comprend au moins une zone de forme tronconique.

3. Élément de protection contre l'usure selon l'une des revendications 1 à 2,
**caractérisé en ce que**
la portion de rétrécissement (32) comprend au moins une zone concave et/ou une zone convexe.

4. Élément de protection contre l'usure selon l'une des revendications 1 à 3,
**caractérisé en ce que**
la portion de fixation (33) forme un collet circulaire qui comprend, au niveau de sa circonférence extérieure, une courbure convexe.

5. Élément de protection contre l'usure selon l'une des revendications 1 à 4,
**caractérisé en ce que**
dans la surface d'appui (35) est réalisé un évidement (34).

6. Élément de protection contre l'usure selon l'une des revendications 1 à 5,
**caractérisé en ce que**
entre le contour extérieur de l'élément en matériau dur (30) et la paroi interne de la partie d'enveloppe (41) est réalisé au moins partiellement un espace creux (44).

7. Élément de protection contre l'usure selon l'une des revendications 1 à 6,
**caractérisé en ce que**
la partie de base (42) comprend un contour extérieur cylindrique.

8. Élément de protection contre l'usure selon l'une des revendications 1 à 7,
**caractérisé en ce que**
la partie de support (40) comprend, indirectement ou directement après la contre-surface (48), une première portion de liaison (47) présentant de préférence une forme tronconique, prolongée indirectement ou directement par une deuxième portion de liaison (46), et
les deux portions de liaison (46, 47) rétrécissent la section transversale de la partie de support (40) en direction de l'extrémité opposée à l'élément en matériau dur (30).

9. Élément de protection contre l'usure selon la revendication 8,
**caractérisé en ce que**
la deuxième portion de liaison (46) supporte un élément de contact (45).

10. Combinaison constituée d'une pièce (20) soudable et d'un élément de protection contre l'usure à savoir un goujon selon l'une des revendications 1 à 9.

11. Combinaison selon la revendication 10,
**caractérisée en ce que**
dans la zone de transition, entre la partie de base (42) et la partie d'enveloppe (41), est réalisée, à l'extérieur, une zone de soudure (43) en forme de bourrelet.

12. Combinaison selon la revendication 11,
**caractérisée en ce que**
la zone de soudure en forme de bourrelet présente une forme annulaire.
